# EUROPEAN PATENT SPECIFICATION

(11) **EP 1 037 536 B1**
(45) Date of publication and mention of the grant of the patent: **04.09.2002**
(21) Application number: 98959300.9
(22) Date of filing: 07.12.1998
(51) Int. Cl.: A23C 19/16, A23C 19/09

(54) **BAKING CHEESE PRODUCT AND METHOD OF PREPARING SAME**
BACKFÄHIGES KÄSEPRODUKT UND VERFAHREN ZU DESSEN HERSTELLUNG
PRODUIT FROMAGER A CUIRE ET SON PROCEDE DE PREPARATION

(30) Priority: 08.12.1997 NL 1007728
(43) Date of publication of application: 27.09.2000
(73) Proprietor: Campina Melkunie B.V.- Divisie Kaas, 5721 KM Asten (NL)
(72) Inventor: BURGHOUT, Herman, Frank, NL-5241 XT Rosmalen (NL); AKKERMAN, Jan, Coen, NL-5231 GD 's-Hertogenbosch (NL)
(74) Representative: Bakkum, Ruben Joseph
(86) International application number: NL9800695
(87) International publication number: WO99029180

(56) References cited:
- EP-A- 0 168 118
- EP-A- 0 530 014
- DE-C- 836 138
- NL-A- 9 100 375
- US-A- 2 025 544
- US-A- 2 358 526
- US-A- 4 000 324
- US-A- 4 559 232
- US-A- 4 585 658

## Description

The present invention relates to a baking cheese product, at least comprising a cheese core and one or more layer(s) of material attached thereto.

A cheese product of this nature is generally known in the prior art and often comprises a slice or block of cheese which is provided with a layer of crumb meal with the aid of beaten egg or the like as binding agent.

A problem with baking or frying cheese is that it melts and runs.

In NL-A-8402229, this problem is solved by freezing the cheese product, including egg and layer of crumbs, and baking or shallow or deep frying it in the frozen state, so that when the outside is suitably brown and crisp, the core of the cheese has not yet melted.

A problem with all known cheese products is that substances other than cheese, such as egg and crumbs and the like impair the character of the cheese product after preparation.

Furthermore, the use of a liquid coating, such as egg, is a problem with regard to the shelf life of the product, and moreover the use of liquids in an otherwise dry environment is in practice not regarded as desirable.

The object of the present invention is to solve the abovementioned problems and, to that end, is characterized in that at least one of the layers of material comprises a layer of crumbs, and in that this layer is attached to the cheese core by prior softening, under the influence of heat, of at least part of the surface of the cheese core.

The layer of crumbs may form a completely closed coating, but may also be a local coating, while the rest of the surface of the cheese core is coated with a different layer of material or a plurality of layers of material.

It will be clear that these measures affect the process which is required in order to prepare the baking cheese product. For example, an incomplete coating will mean that the baking cheese product cannot be deep-fried, although this will be possible if the cheese is selected appropriately.

Preferably, the other layers of material, if present, are also attached to the cheese core by prior softening, under the influence of heat, of at least part of the surface of the cheese core and applying the layers of material to the softened surface.

In the present context, layers of material are intended to mean edible materials. It has been found that these layers are permanently attached, according to the invention, to the cheese core without having to use binding agents, such as egg or the like, or other ways of attachment.

Apart from the layer of crumbs, the other layers of material are not particularly limited and may be selected from a wide range of edible material layers.
Advantageously, they are selected from one or more of the following: a layer of crumbs, a layer of cheese, a layer of dough, a layer of meat.

With a substantially continuous layer of crumbs, the cheese product can be baked, shallow- or deep-fried or prepared on a barbecue. Surprisingly, it has been found that when a layer of crumbs which forms a continuous coating and is attached according to the invention is used, the cheese product does not have to be frozen prior to preparation, but rather can be baked or fried when it is at room temperature. The cheese substantially does not run.

The cheese core may also be provided with one or more layers of cheese as layers of material, which in turn may be provided with further layers of cheese. Layered cheeses which can be prepared in this way are, for example, Magor and Five County Cheese.

A layer of dough is intended, for example, to mean a layer of bread dough or of puff pastry. Naturally, combinations of different layers of material are also possible. In this context, consideration may be given, for example, to a cheese product with a layer of crumbs on one side and a layer of dough on the other side.

A layer of crumbs which may be used may contain various crumb substances which generally lead to the formation of a crust during baking, shallow-frying, deep-frying and the like. Examples of crumb substances are: crumb meal, grains of cheese, crushed nuts, etc.

Preferably, the cheese product comprises a layer of crumbs which comprises grains of cheese and grains of starch. A layer of crumbs of this nature can be baked, shallow-fried, deep-fried, etc. very successfully without the layer of crumbs coming off or the cheese of the cheese core running excessively. An important advantage in this context is that no non-cheese comestibles are used.

In particular, the grains of cheese comprise grated cheese. The grains of cheese used for the layer of crumbs are not particularly limited, and the cheese used for these grains may be selected from young, medium, mature, extra mature, old or very old cheese. Consideration may also be given to other cheeses, such as mustard cheese, paprika cheese, gorgonzola, mascarpone, feta, stilton, gruyère, cheese containing vegetable oils and fats, etc.

As well as grated cheese, pressed or extruded grains of cheese may also be used for the grains of cheese.

The cheese core may likewise consist of many different types of cheese or mixtures thereof and may have any desired shape. The shape varies from slices to small blocks, small balls, specially shaped cheese cores, such as rings, animal shapes, etc.

The grains of starch are advantageously grains of tapioca. Particularly preferred grains of tapioca are grains of manihot utilissima.

The weight ratio between the grains of cheese and grains of starch in the layer of crumbs is preferably approximately 5:1.

In addition to grains of cheese and grains of starch, the layer of crumbs may also contain other garnishes or flavouring substances, such as for example mustard seeds, nuts (walnuts, peanuts), ham, salami, nettles, herbs, tomato flakes, asparagus powder, mushrooms, chestnuts, onion, garlic, etc.

Advantageously, the layer of crumbs also comprises a browning agent which serves to provide the crust with a brown colour at a relatively low temperature. The said browning agent may be selected from many known browning agents, but preferably comprises a reducing sugar, in particular rhamnose. The amount of browning agent in practice advantageously amounts to approximately 0.25% by weight of the layer of crumbs.

It should be noted that the cheese core may also have various compositions. In addition to cheese, they may also contain other foodstuffs or flavouring substances, as mentioned above. Thus it is possible, by way of example, to place two slices of cheese on top of one another, with a slice of ham or a slice of a different type of cheese between them. It will be clear that very many variants of the cheese product according to the present invention are possible by selecting the foodstuffs which are added. In many of these cases it is possible to utilize the invention, in other words the prior softening, by means of heat, of at least part of the surface of a cheese core in order then to attach a layer of material thereto.

The invention furthermore provides a method for preparing baking cheese product according to the invention, at least comprising the steps of:
- providing a cheese core;
- at least locally softening the surface of the cheese core by heating;
- applying a layer of crumbs to the softened surface of the cheese core.

Softening the surface of the cheese core by heating can be carried out in a wide variety of ways, but in practice it has been found that using a shortwave infrared oven provides particularly good results. An oven of this nature allows very intensive heating of the surface within a very short time, with the result that only a thin layer on the surface of the cheese core softens, melts or becomes sticky, after which one or more layers of material are applied to this soft outer layer.

It will be clear that the other layers of material, if present, are preferably also attached to the cheese core in the same way as the layer of crumbs, namely by at least locally softening, by means of heating, the surface of the cheese core and applying the layer of material.

Preferably, the one or more layer(s) of material, after they have been applied, is/are pressed slightly into the surface of the cheese core with the aid of pressure-exerting means. Pressure-exerting means are intended, by way of example,to mean a cooling pressure belt. This has the additional advantage that while the layer of crumbs is being pressed into the surface of the cheese core, the softened surface is also cooled and as a result solidifies again.

Two examples which illustrate the present invention are given below.

### EXAMPLE 1

Slices of young Gouda cheese which are approximately 1.5 cm thick were cut into triangles, each weighing approximately 70 g (dimensions 10 × 8 × 13 cm). The triangular slices were heated on both sides, within approximately 80 s, to 75°C with the aid of three IR lamps (output: 1000 watts each), after which a mixture of grated cheese, tapioca and glucose (5:1:0.02 parts by weight) was distributed uniformly over the hot surface. After the mixture had been applied, each piece of cheese was cooled to approximately 16°C with the aid of a cooled stainless steel plate.

A cheese product provided with a layer of crumbs according to the invention, which had been prepared in this way, was fried for 2.5 min on each side in a hot frying pan containing sunflower oil. During cooking, the product retained its triangular shape. The result was a pleasantly brown and crispy hot piece of cheese with a good flavour.

### EXAMPLE 2

Mature cheese was processed into triangles of cheese with a coating of grated cheese, tapioca and dextrose (5:1:0.02 parts by weight) in the same way as in Example 1. In this case, 9 IR lamps with an output of 1000 watts each were used as the heat source, heating the pieces of cheese to 75°C within approximately 12 s. The result after frying in a frying pan was comparable to the cheese from Example 1.

## Claims

1. Baking cheese product, at least comprising a cheese core and one or more layer(s) of material attached thereto, **characterized in that** at least one of the layers of material comprises a layer of crumbs, and **in that** this layer is attached to the cheese core by prior softening, under the influence of heat, of at least part of the surface of the cheese core.

2. Baking cheese product according to claim 1, **characterized in that** one or more of the other layers of material is/are selected from a layer of crumbs, a layer of cheese, a layer of dough, and a layer of meat.

3. Baking cheese product according to claim 1 or 2, **characterized in that** the layer of crumbs comprises grains of cheese and grains of starch.

4. Baking cheese product according to claim 3, **characterized in that** the grains of cheese comprise grated cheese.

5. Baking cheese product according to claim 3 or 4, **characterized in that** the grains of starch are grains of tapioca.

6. Baking cheese product according to one or more of claims 3-5, **characterized in that** the layer of crumbs also comprises a browning agent.

7. Baking cheese product according to claim 6, **characterized in that** the browning agent comprises a reducing sugar.

8. Method for preparing a baking cheese product according to one or more of the preceding claims, at least comprising the steps of:
- providing a cheese core;
- softening at least part of the surface of the cheese core by heating; and
- applying a layer of crumbs to the softened surface of the cheese core.

9. Method according to claim 8, **characterized in that** the one or more layer(s) of material, after they have been applied, are pressed slightly into the surface of the cheese core with the aid of pressure-exerting means.

## Patentansprüche

**1.** Backfähiges Käseprodukt, welches mindestens einen Käsekern und mindestens eine oder mehrere Materialschichten an diesem angebracht enthält, **dadurch gekennzeichnet, dass** mindestens eine der Materialschichten eine Schicht aus Krume oder Bröseln ist, und dass diese Schicht an dem Käsekern durch vorausgehendes Erweichen unter Wärmewirkung von mindestens einem Teil der Oberfläche des Käsekerns angebracht ist.

**2.** Backfähiges Käseprodukt nach Anspruch 1, **dadurch gekennzeichnet, dass** eine oder mehrere der anderen Materialschichten aus einer Schicht aus Krume oder Bröseln, einer Käseschicht, einer Teigschicht und einer Fleischschicht gewählt ist/sind.

**3.** Backfähiges Käseprodukt nach Anspruch 1 oder 2, **dadurch gekennzeichnet, dass** die Schicht aus Krume oder Bröseln Körner aus Käse und Körner aus Stärke enthält.

**4.** Backfähiges Käseprodukt nach Anspruch 3, **dadurch gekennzeichnet, dass** die Käsekörner geriebenen Käse umfassen.

**5.** Backfähiges Käseprodukt nach Anspruch 3 oder 4, **dadurch gekennzeichnet, dass** die Stärkekörner Tapiokakörner sind.

**6.** Backfähiges Käseprodukt nach einem oder mehreren der Ansprüche 3 bis 5, **dadurch gekennzeichnet, dass** die Schicht aus Krume oder Bröseln ferner ein Bräunungsmittel enthält.

**8.** Verfahren zum Herstellen eines backfähigen Käseprodukts nach einem oder mehreren der vorstehenden Ansprüche, welches zumindest die folgenden Verfahrensschritte umfasst:
- Bereitstellen eines Käsekerns;
- Erweichen mindestens eines Teils der Oberfläche des Käsekerns durch Erwärmen; und
- Auftragen einer Lage aus Krume oder Bröseln an der erweichten Oberfläche des Käsekerns.

**9.** Verfahren nach Anspruch 8, **dadurch gekennzeichnet, dass** die eine oder mehrere Materialschicht(en) nach dem Auftrag geringfügig in die Oberfläche des Käsekerns mit Hilfe einer druckausübenden Einrichtung hineingedrückt wird.

## Revendications

1. Produit fromager à cuire, comprenant au moins un coeur en fromage et une ou plusieurs couche(s) de matières assemblée(s) à ce coeur, **caractérisé en ce qu'**au moins l'une des couches de matériau comprend une couche de chapelure, et **en ce que** cette couche est assemblée au coeur en fromage par un ramollissement préalable, sous l'influence de la chaleur, d'au moins une partie de la surface du coeur en fromage.

2. Produit fromager à cuire selon la revendication 1, **caractérisé en ce qu'**une ou plusieurs des autres couches de matières est(sont) choisie(s) parmi une couche de chapelure, une couche de fromage, une couche de pâte et une couche de viande.

3. Produit fromager à cuire selon la revendication 1 ou 2, **caractérisé en ce que** la couche de chapelure comprend des grains de fromage et des grains d'amidon.

4. Produit fromager à cuire selon la revendication 3, **caractérisé en ce que** les grains de fromage comprennent du fromage râpé.

5. Produit fromager à cuire selon la revendication 3 ou 4, **caractérisé en ce que** les grains d'amidon sont des grains de tapioca.

6. Produit fromager à cuire selon l'une ou plusieurs des revendications 3 à 5, **caractérisé en ce que** la couche de chapelure comprend également un agent de brunissement.

7. Produit fromager à cuire selon la revendication 6, **caractérisé en ce que** l'agent de brunissement comprend un sucre réducteur.

8. Méthode de préparation d'un produit fromager à cuire selon l'une ou plusieurs des revendications précédentes, comprenant au moins les étapes de :
- fourniture d'un coeur en fromage ;
- ramollissement d'au moins une partie de la surface du coeur en fromage par chauffage ; et
- application dune couche de chapelure sur la surface ramollie du coeur en fromage.

9. Méthode selon la revendication 8, **caractérisée en ce que** la ou les couches couche(s) de matières, après son(leur) application, est(sont) légèrement pressée(s) dans la surface du coeur en fromage à l'aide d'un moyen exerçant une pression.
